# EUROPEAN PATENT SPECIFICATION

(11) **EP 1 026 536 B1**
(45) Date of publication and mention of the grant of the patent: **13.03.2002**
(21) Application number: 99830729.2
(22) Date of filing: 25.11.1999
(51) Int. Cl.: G02B 26/08, G09F 9/37, G02B 26/02

(54) **Electrostatically controlled oscillating mirror**
Schwingspiegel mit elektrostatischem Antrieb
Miroir oscillant à commande électrostatique

(30) Priority: 02.02.1999 IT TO990069
(43) Date of publication of application: 09.08.2000
(73) Proprietor: C.R.F. Società Consortile per Azioni, 10043 Orbassano (Torino) (IT)
(72) Inventor: Pizzi, Marco, 10043 Orbassano, Torino (IT); Koniachkine, Valerian, 10043 Orbassano, Torino (IT); Lambertini, Vito, 10043 Orbassano, Torino (IT); Pullini, Daniele, 10043 Orbassano, Torino (IT)
(74) Representative: Notaro, Giancarlo

(56) References cited:
- EP-A- 0 550 022
- US-A- 3 553 364
- US-A- 4 194 189
- US-A- 4 723 834
- US-A- 5 677 823
- US-A- 5 774 252
- WANG P K C ET AL: "A METHOD FOR DESIGNING ELECTROSTATIC-ACTUATOR ELECTRODE PATTERN IN MICROMACHINED DEFORMABLE MIRRORS" SENSORS AND ACTUATORS A,CH,ELSEVIER SEQUOIA S.A., LAUSANNE, vol. A55, no. 2/03, 31 July 1996 (1996-07-31), pages 211-217, XP000641647 ISSN: 0924-4247

## Description

The present invention relates to an oscillating mirror device which is electrostatically controlled.

The invention relates in particular to a device as set forth in the pre-characterizing portion of Claim 1. A device of this kind is known from EP-A-0 550 022.

There have been already proposed in the past electrostatic motors of low power and small dimensions adapted for use as actuators in applications of microelectronic technology for actuating mechanical devices and the like, in conditions where vibrations take place, such as in the automotive field. These electrostatic actuators make use of flexible sheets, also called cilia or "petals", which are electrically conductive, each having one end associated with a stator and the opposite end adjacent to a movable element. The application of voltage pulses between the petals and one electrode associated with the movable element causes adhesion by electrostatical effect of the petals to the movable element, with a resulting movement of the latter relative to the stator.

An actuator of the above indicated type is for instance disclosed in Dyatlov V. L., κonyaskin V. V., Potapov B. S. and Pyankov Yu. A., "Prospects of the Employment of Synchrotron Radiation in film Instruments and Methods in Physics Research, A359 (1995), pages 394-395.

The object of the present invention is that of proposing new and unique applications of electrostatic petals for driving an oscillating mirror.

In view of achieving this object, the invention provides an oscillating mirror device which is electrostatically controlled comprising the features of claim 1.

Further features and advantages of the invention will become apparent from the description which follows with reference to the annexed drawings, given purely by way of non limiting example, in which:
figures 1, 2, 3 show three different operative positions of a first embodiment of the device according to the invention,
figures 4, 5, 6 show three different operative conditions of a second embodiment of the device which does not form part of the invention, and
figure 7 is a cross-sectional view of a third embodiment of the device which does not form part of the invention.

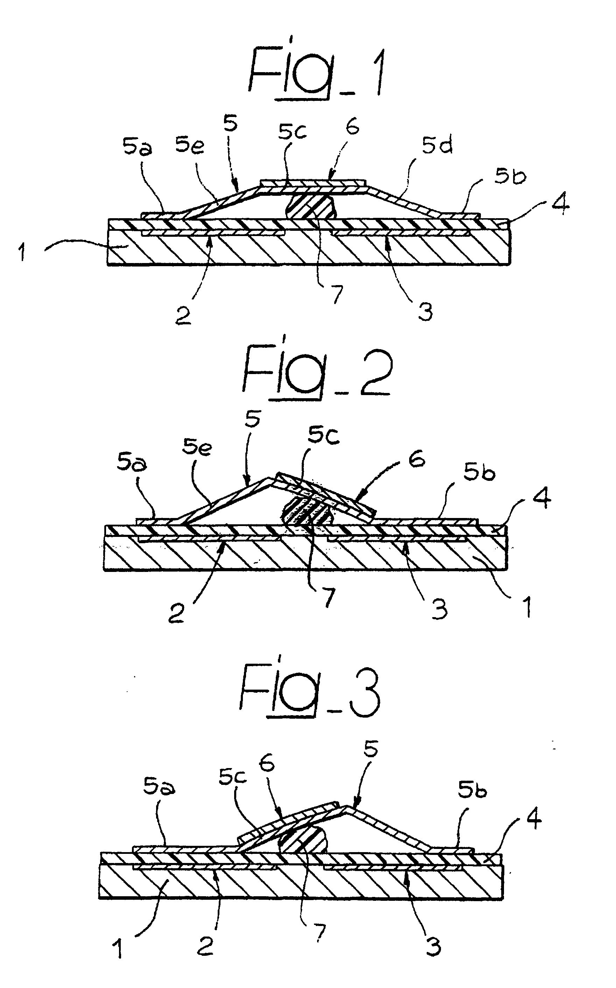

With reference to figures 1, 2, 3, the device shown therein comprises a planar base 1 constituted by a sheet of steel or alumina having a thickness of some millimeters. On base 1 two separate electrodes 2, 3 are provided by evaporation, screen-printing, dipping or spin-coating. Subsequently, the surface is insulated by a layer 4 of dielectric or ferroelectric material having a thickness between one tenth of micrometers and some tens of micrometers. The movable part of the device is constituted by a thin metal film 5 provided by evaporation, having a thickness of some micrometers (petal). On the central portion of the upper surface of film 5 a mirror 6 is applied by electro-deposition. Petal 5 has two ends 5a, 5b which are secured to the surface of the base and its central portion, designated by 5c, which rests on the base by means of a spacer element 7 having a rounded shape, made of a friction resistant material, having a low friction coefficient.

If an electric voltage is applied between petal 5 and electrode 3 the petal portion 5d intermediate between the central portion 5c and the end 5b adheres by electrostatical effect to base 1 (see figure 2) and the mirror 6 is inclined rightwardly (with reference to the drawings). By applying instead a voltage between the petal and the electrode 2, the intermediate portion 5e between the end 5a and the portion 5c of petal 5 adheres by electrostatical effect to the base (figure 3) thus orienting the mirror leftwardly. By applying a voltage alternatively between the petal and electrode 2 or the petal and electrode 3, an oscillation of the mirror is obtained between the two end positions. In operation, all the intermediate positions are also exploited.

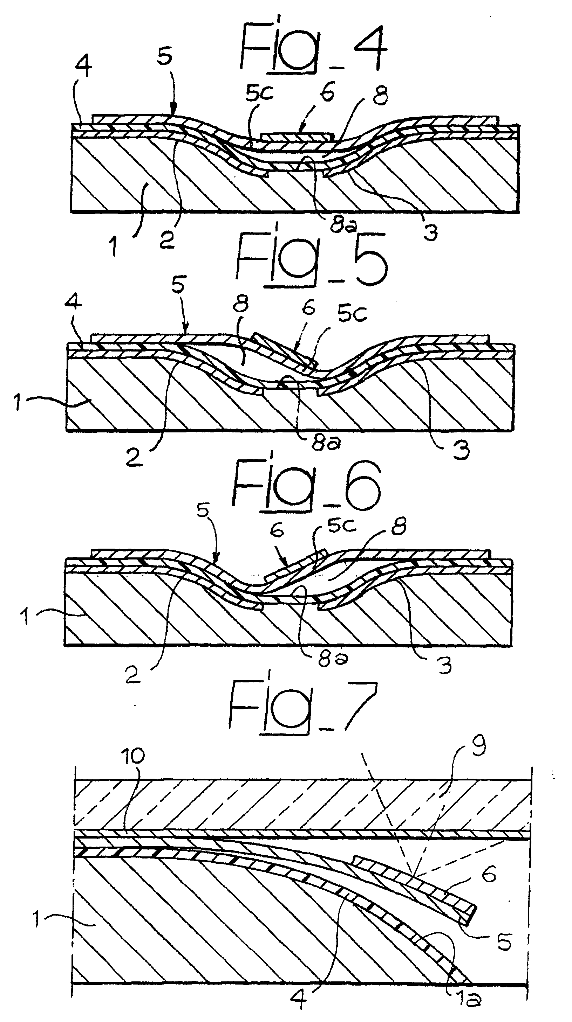

In a variant which does not form part of the invention (see figures 3, 4, 5) base 1 has an upper surface with a cavity 8 having a bottom surface 8a. The petal 5 has its central portion 5c spaced from the bottom part 8a. The alternative activation of the two electrodes 2, 3 causes adhesion by electrostatical effect of the petal 5 against one side or the other of the bottom wall 8a, so as to orient the mirror 6 (see figures 5, 6).

In a further variant which does not form part of the invention, base 1 is constituted of steel and acts as the first electrode having a convex surface 1a covered by a layer of insulating material 4. The fixed part further includes a plate of transparent material, such as glass, 9 having a surface facing the convex surface 1a and coated with a layer of electrically conductive transparent material (such as Indium Titanium Oxide (ITO)), if necessary with a further dielectric layer (not shown).

The petal 5 has one end anchored to the fixed part and the movable part projecting in a cantilever fashion in the space between the facing surfaces of base 1 and glass plate 9 and carrying mirror 6. The alternated activation of the electrod 10 associated with the glass plate 9 and the electrode constituted by element 1 causes oscillation of the movable part of petal 5 and the resulting variation in inclination of mirror 6, which receives and reflects light rays through plate 9. From the foregoing description, it is clearly apparent that the device according to the invention is able to drive the oscillation of a mirror simply and efficiently, while using an electrostatically controlled petal as actuator.

Naturally, while the principle of the invention remains the same, the details of construction and the embodiments may widely vary with respect to what has been described and illustrated purely by way of example, without departing from the scope of the present invention comprising the features of claim 1.

## Claims

1. Electrostatically controlled oscillating mirror device, comprising:
a mirror (6),
a supporting structure (1),
a movable petal (5) comprising a thin film of electrically conductive material, having at least one end portion 5a connected to said supporting structure (1) and a movable portion carring said mirror (6),
a first electrode (2) and a second electrode (3) spaced from each other, carried by the supporting structure (1),
said petal (5) being adapted to be biassed, by electrostatical effect, towards the first electrode (2) or the second electrode (3), when voltage is applied respectively between the petal (5) and the first electrode (2), or between the petal (5) and the second electrode (3), so as to cause the mirror to assume different operative positions,
**characterised in that** the supporting structure comprises a planar base (1) on which two thin films (2, 3) are applied of an electrically conductive material, said films constituting the first and the second electrode, said petal (5) being constituted by a thin film having both ends (5, 5b) anchored to the base (1) and a central portion (5c) carrying the mirror (6) and resting on the base (1) with the interposition of a spacer element (7), so that the two petal portions (5d, 5e) intermediate between the central portion (5c) and the end portions (5a, 5b) are able to selectively adhere to the base (1) depending upon activation of the first electrode (2) or the second electrode (3), so as to arrange the mirror (6) in different operative positions.

2. Device according to claim 1, **characterised in that** the base carrying the two electrodes (2, 3) is coated with a layer of dielectric material.

## Patentansprüche

1. Elektrostatisch gesteuerte Schwingspiegelvorrichtung, umfassend:
einen Spiegel (6),
eine Tragkonstruktion (1),
ein bewegliches Blatt (5), das eine dünne Folie aus elektrisch leitendem Material umfasst, mit
mindestens einem mit der Tragkonstruktion (1) verbundenen Endabschnitt (5a) und einem den Spiegel (6) tragenden beweglichen Abschnitt,
eine erste Elektrode (2) und eine zweite Elektrode (3), die voneinander beabstandet sind und durch die Tragkonstruktion (1) getragen werden,
wobei das Blatt (5) geeignet ist, durch elektrostatische Effekte zu der ersten Elektrode (2) oder der zweiten Elektrode (3) vorgespannt zu werden, wenn Spannung zwischen dem Blatt (5) und der ersten Elektrode (2) bzw. zwischen dem Blatt (5) und der zweiten Elektrode (3) angelegt wird, um den Spiegel zu veranlassen, verschiedene Betriebsstellungen einzunehmen,
**dadurch gekennzeichnet, dass** die Tragkonstruktion eine ebene Basis (1) umfasst, auf der zwei dünne Folien (2, 3) aus einem elektrisch leitenden Material aufgetragen sind, wobei die Folien die erste und die zweite Elektrode bilden, wobei das Blatt (5) durch eine dünne Folie gebildet ist, deren beide Enden (5, 5b) an der Basis (1) befestigt sind und die einen zentralen Abschnitt (5c) aufweist, der den Spiegel (6) trägt und unter der Zwischenlagerung eines Abstandhalterelementes (7) auf der Basis (1) aufliegt, so dass die zwei, zwischen dem zentralen Abschnitt (5c) und den Endabschnitten (5a, 5b) zwischenliegenden Blattabschnitte (5d, 5e) in der Lage sind, selektiv in Abhängigkeit von der Aktivierung der ersten Elektrode (2) oder der zweiten Elektrode (3) an der Basis (1) zu haften, um den Spiegel (6) in verschiedenen Betriebstellungen anzuordnen.

2. Vorrichtung gemäß Anspruch 1, **dadurch gekennzeichnet, dass** die Basis, die die beiden Elektroden (2, 3) trägt, mit einer Schicht aus dielektrischem Material beschichtet ist.

## Revendications

1. Dispositif à miroir oscillant commandé électro-statiquement, comprenant :
un miroir (6),
une structure de support (1),
un pétale mobile (5) comprenant un film mince d'un matériau conducteur de l'électricité, ayant au moins une partie d'extrémité (5a) connectée à la structure de support (1) et une partie mobile portant le miroir (6), et
une première électrode (2) et une seconde électrode (3) distantes l'une de l'autre, portées par la structure de support (1),
le pétale (5) étant destiné à être rappelé, par un effet électrostatique, vers la première électrode (2) ou la seconde électrode (3), lorsqu'une tension est appliquée respectivement entre le pétale (5) et la première électrode (2) ou entre le pétale (5) et la seconde électrode (3), afin que le miroir prenne différentes positions de fonctionnement,
**caractérisé en ce que** la structure de support comporte une base plane (1) sur laquelle sont appliqués deux films minces (2, 3) d'un matériau conducteur de l'électricité, les films constituant la première et la seconde électrode, le pétale (5) étant constitué d'un film mince ayant ses deux extrémités (5, 5b) fixées à la base (1) et une partie centrale (5c) portant le miroir (6) est en appui sur la base (1) avec interposition d'un élément d'entretoise (7), si bien que les deux parties de pétale (5d, 5e) comprises entre la partie centrale (5c) et les parties d'extrémité (5a, 5b) peuvent adhérer sélectivement à la base (1) suivant l'activation de la première électrode (2) ou de la seconde électrode (3), et que le miroir (6) est placé aux différentes positions de fonctionnement.

2. Dispositif selon la revendication 1, **caractérisé en ce que** la base portant les deux électrodes (2, 3) est revêtue d'une couche d'un matériau diélectrique.
